# FASCICULE DE BREVET EUROPEEN

(11) **EP 1 852 311 B1**
(45) Date de publication et mention de la délivrance du brevet: **14.01.2009**
(21) Numéro de dépôt: 07107381.1
(22) Date de dépôt: 02.05.2007
(51) Int. Cl.: B60R 5/04, B60R 7/02

(54) **Dispositif cache-bagages pour véhicule automobile à cassette portant au moins deux écrans d'occultation, et véhicule automobile correspondant.**
Gepäckabdeckungsvorrichtung für Kraftfahrzeug mit Kassette, die mindestens zwei Abdeckungsblenden beinhaltet, und entsprechendes Kraftfahrzeug
Baggage-concealing device for an automobile with a cassette containing at least two concealing screens and corresponding automobile

(30) Priorité: 02.05.2006 FR 0603918
(43) Date de publication de la demande: 07.11.2007
(73) Titulaire: Wagon SAS, 79302 Bressuire Cédex (FR)
(72) Inventeur: Fourel, Pascal, 35400 Saint Malo (FR)
(74) Mandataire: Bioret, Ludovic

(56) Documents cités:
- EP-A2- 1 247 693
- DE-A1- 10 208 642
- DE-A1-6102004 021 55
- FR-A1- 2 658 767
- JP-A- 8 183 393
- JP-A- 2001 097 125
- US-A1- 2005 248 174

## Description

### 1. Domaine de l'invention

Le domaine de l'invention est celui de l'équipement intérieur des véhicules automobiles. Plus précisément, l'invention concerne les cache-bagages destinés à occulter au moins une partie d'un coffre d'un véhicule automobile.

### 2. Solutions de l'art antérieur

On connaît de nombreuses solutions cache-bagages pour véhicules automobiles. Ces cache-bagages peuvent notamment être réalisés à l'aide d'une toile d'occultation. Cette toile peut être montée sur un tube enrouleur de façon à pouvoir se déployer ou s'enrouler selon les besoins. Une cassette contenant le tube enrouleur est le plus souvent fixée au fond du coffre, sur ou à proximité du dossier de la banquette arrière du véhicule. La toile est ensuite déployée pour recouvrir la totalité du coffre du véhicule.

Selon cette approche, quand la toile du cache-bagages est repliée, l'utilisateur, pour la déployer, doit aller saisir une barre de tirage qui se trouve au niveau de la cassette, c'est-à-dire au fond du coffre, au niveau de la banquette arrière. Il est particulièrement malaisé de se pencher pour attraper cette barre de tirage, notamment quand le coffre est de dimension importante. Le déploiement d'un tel cache-bagages est donc une opération inconfortable pour l'utilisateur, particulièrement les utilisateurs de petite taille ou les utilisateurs ayant des difficultés à se pencher.

Par ailleurs, un tel cache-bagages, quand il est déployé, ne permet pas l'accès à l'intérieur du coffre depuis l'intérieur du véhicule. Ainsi, un utilisateur installé sur la banquette arrière du véhicule et souhaitant prendre un objet dans le coffre ne peut pas le faire de l'intérieur du véhicule quand le cache-bagages est déployé. En effet, il n'a alors pas accès à la barre de tirage, qui se trouve à l'extrémité du coffre éloignée de la banquette arrière.

L'utilisation d'un cache-bagages comprenant un tube enrouleur portant un écran d'occultation pour couvrir ou pour séparer un coffre est connu du document US2005/0248174 A1 aussi bien que du document DE 10 2004 021 556 A1. Dans les deux documents, le tube enrouleur peut être disposé dans une première position dans une partie supérieure du coffre, l'écran étant alors déployé dans un plan horizontal, ou dans une deuxième position où le tube enrouleur est disposé dans une partie inférieure du coffre et l'écran est alors déployé vers la partie supérieure.

Un cache-bagages comprenant deux tubes enrouleurs portant chacun un écran d'occultation est aussi connu dans le document DE 10 2004 021 556 A1. Les deux écrans sont susceptibles d'être déployés dans des directions différentes.

### 3. Objectifs de l'invention

L'invention a notamment pour objectif de pallier ces inconvénients de l'art antérieur.

Plus précisément, un objectif de l'invention est de fournir un système simple, modulaire et efficace de cache-bagages pour véhicule automobile. Notamment, un objectif de l'invention est de fournir un cache-bagages plus facile à utiliser par l'utilisateur, qu'il soit à l'intérieur ou à l'extérieur du véhicule.

De façon particulière, l'invention a également pour objectif de fournir des moyens d'aménagement et de modularité du coffre du véhicule automobile (en anglais « cargo management »), sans augmenter fortement la complexité et le nombre de moyens mis en oeuvre. En effet, il y a aujourd'hui une demande importante de la part des consommateurs de possibilités d'aménagement de l'espace du coffre. Les cache-bagages de l'art antérieur ne permettent pas un tel aménagement, et des moyens spécifiques indépendants doivent être développés.

### 4. Exposé de l'invention

Ces objectifs, ainsi que d'autres qui apparaîtront par la suite, sont atteints à l'aide d'un dispositif cache-bagages selon la revendication 1.

Ainsi, la cassette peut être installée dans une zone intermédiaire du coffre, et des écrans peuvent être déployés de façon indépendante, de part et d'autre de la cassette. Ceci permet de n'ouvrir qu'une partie du cache-bagages (c'est-à-dire un seul écran), aussi bien de l'intérieur du véhicule que de l'extérieur.

Selon un mode de mise en oeuvre principal, on prévoit deux écrans pouvant se déployer dans un plan sensiblement horizontal (défini par les premiers rails), dans des sens opposés. D'autres mises en oeuvre complémentaires sont envisageables, comme précisé ci-après.

Préférentiellement, ladite cassette comprend et/ou coopère avec des moyens de coulissement le long de deux premiers rails de guidage montés dans des parois latérales dudit coffre.

Ainsi, l'utilisateur peut organiser l'utilisation du cache-bagages comme il le souhaite, et repousser la cassette à une extrémité du coffre, lorsqu'il n'est pas utilisé.

De façon avantageuse, ladite cassette et/ou au moins un desdits premiers rails comprend des moyens de blocage du coulissement de ladite cassette dans lesdits rails.

Avantageusement, au moins un desdits écrans d'occultation porte une barre de tirage coulissant le long desdits premiers rails de guidage.

Selon un mode de réalisation avantageux, ladite cassette et/ou la ou lesdites barres de tirage peuvent coulisser dans au moins un second jeu de rails de guidage monté dans ledit véhicule et/ou être solidarisées à au moins un point de fixation éloigné du plan défini par lesdits premiers rails.

Cette approche permet de fournir, outre une fonction cache-bagages classique, des fonctions complémentaires de « cargo management », avec le même équipement.

Notamment, au moins un desdits seconds jeux de rails peut être situé sensiblement au niveau du plancher dudit coffre.

Ceci permet de déployer au moins un des écrans sensiblement verticalement.

De façon avantageuse, ladite cassette comporte des premiers moyens de coulissement destinés à coulisser au moins dans lesdits premiers rails et des seconds moyens de coulissement destinés à coulisser au moins dans un desdits seconds jeux de rails.

Notamment, les seconds moyens de coulissement peuvent coopérer avec des rails montés sur le plancher du coffre.

Préférentiellement, le dispositif cache-bagages est amovible.

Il peut ainsi être rangé (dans le véhicule ou à l'extérieur). On peut prévoir que la cassette soit pliable.

Ladite cassette peut par ailleurs être équipée de moyens d'équilibrage pour la maintenir perpendiculaire auxdits rails.

L'invention concerne également les véhicules automobiles comprenant un dispositif cache-bagages tel que décrit ci-dessus.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente de façon simplifiée un exemple de dispositif cache-bagages selon un mode de réalisation de l'invention, comprenant une cassette et des rails ;
- la figure 2 présente le dispositif cache-bagages de la figure 1 dans lequel l'une des toiles d'occultation est déployée ;
- la figure 3 représente le dispositif cache-bagages des figures 1 et 2, dans lequel les deux toiles d'occultation sont déployées ;
- la figure 4 est une vue partielle d'un dispositif cache-bagages selon un mode de réalisation de l'invention, dans une position permettant l'accès à une partie du volume du coffre ;
- la figure 5 présente le dispositif cache-bagages de la figure 4 dans une position permettant l'accès à la totalité du volume du coffre ;
- la figure 6 présente le dispositif cache-bagages de la figure 4 dans une position permettant l'accès au coffre depuis l'habitacle du véhicule ;
- la figure 7 présente un dispositif cache-bagages selon un mode de réalisation particulier de l'invention, dans une position de segmentation du volume du coffre en « panier » ;
- la figure 8 présente le dispositif cache-bagages de la figure 7 dans une position en « compartiment secret » ;
- la figure 9 est une vue de dessous d'un dispositif cache-bagages selon un mode de réalisation de l'invention, montrant un système d'équilibrage ;
- la figure 10 est une vue de détail d'un dispositif cache-bagages selon un mode de réalisation de l'invention.

### 6. Description détaillée de l'invention

### 6.1 Rappel du principe de l'invention

Le principe général de l'invention repose sur la mise en oeuvre d'un cache-bagages comprenant une cassette comprenant au moins deux enrouleurs. Un écran d'occultation, par exemple une toile d'occultation, est monté sur chacun de ces deux enrouleurs. La cassette et, éventuellement, les barres de tirage des toiles d'occultation peuvent coulisser le long de rails prévus dans le coffre du véhicule.

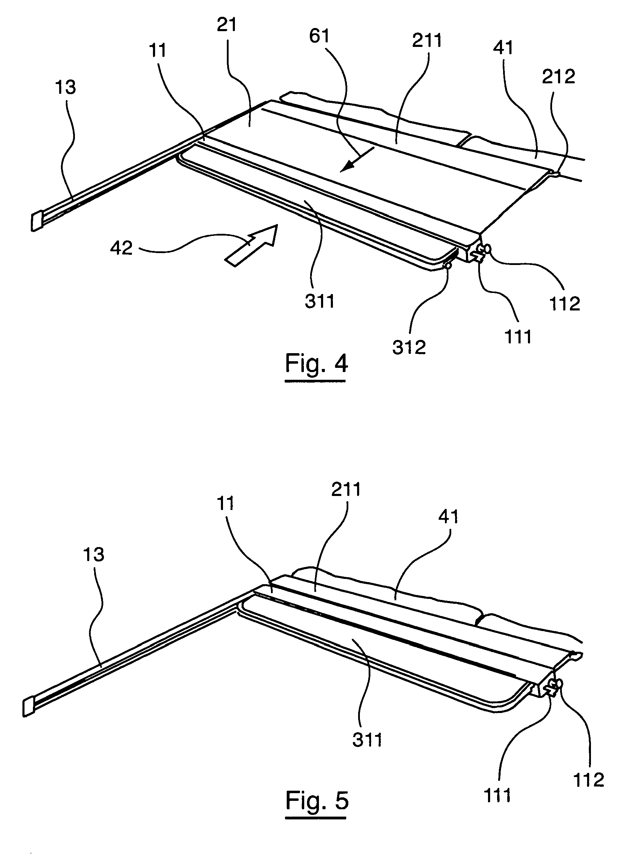

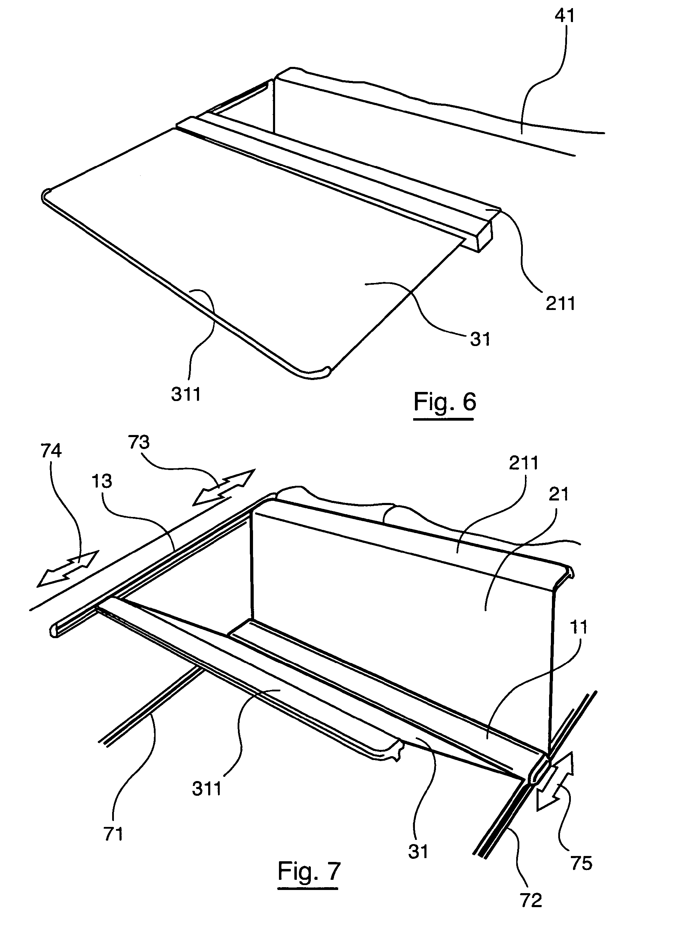

On peut ainsi définir de nombreuses configurations d'aménagement (en anglais « cargo management ») et notamment une configuration « cache-bagages » (par exemple les figures 4 à 6) et une configuration « panier » (par exemple la figure 7), dans laquelle l'invention permet le rangement ou le maintien d'objet dans un espace réduit par rapport au coffre et défini par le dispositif.

### 6.2 Cassette à double enrouleur

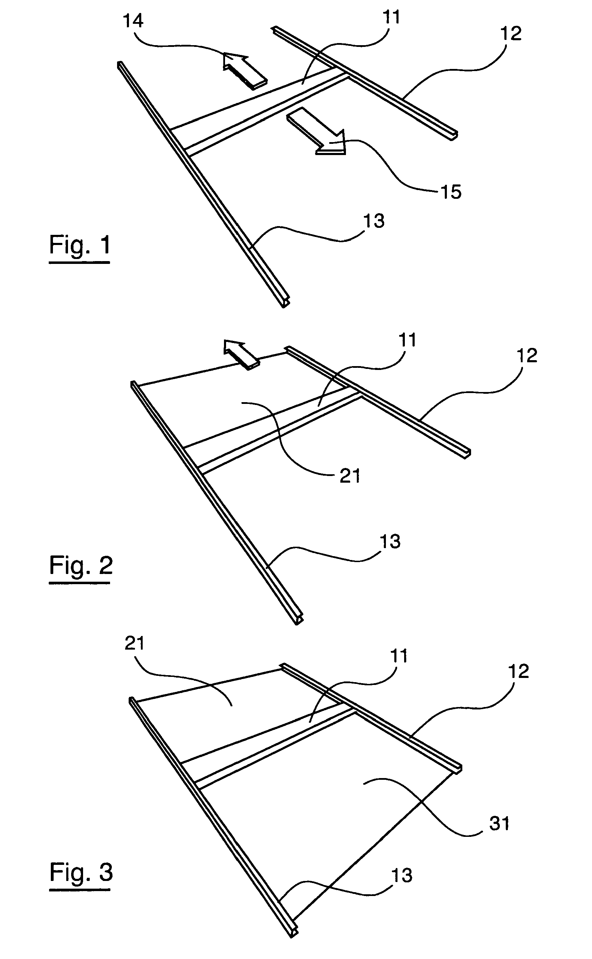

Les figures 1, 2 et 3 illustrent un dispositif cache-bagages selon un mode de réalisation de l'invention. On peut voir sur ces figures la cassette 11 du cache-bagages, qui est montée coulissante le long de deux rails 12 et 13 (qui sont montés sur les parois latérales du coffre, non représentées par simplification), dans les deux sens indiqués par les flèches 14 et 15. Cette cassette 11 contient deux tubes enrouleurs, sur laquelle sont montées deux toiles d'occultation (21, figures 2 et 31, figure 3). De tels tubes enrouleurs sont bien connus en eux-mêmes de l'homme du métier. Ils peuvent être dédoublés, par exemple pour permettre de réaliser une cassette pliable.

Sur la figure 2, la toile d'occultation 21 est déployée jusqu'à l'extrémité des rails 12 et 13 (correspondant par exemple à la partie proche du dossier de la banquette arrière). Sur la figure 3, les deux toiles d'occultation 21 et 31 sont déployées, afin que le dispositif d'occultation couvre la totalité de la surface du coffre du véhicule. Comme le montre cette figure, la cassette 11 est conçue de façon que les deux toiles 21 et 31 puissent se déployer dans des directions différentes.

Les deux tubes enrouleurs portent des longueurs de toile suffisantes pour couvrir au moins l'espace du coffre, quelle que soit la position de la cassette le long des rails.

### 6. 3 Utilisation avec le premier jeu de rails

Les figures 4, 5 et 6 montrent différentes positions d'utilisation (encore appelées positions « cache-bagages ») d'un dispositif cache-bagages selon un mode de réalisation de l'invention. Sur ces figures, un seul rail est représenté. Le second n'est pas illustré, de façon à laisser apparaître les éléments de coulissement de la cassette.

En position d'occultation, les deux toiles d'occultation du cache-bagages sont déployées (voir figure 3) afin de couvrir la totalité de la surface du coffre du véhicule. Ces deux toiles d'occultation 21 et 31 sont maintenues en position par leurs barres de tirage respectives 211 et 311, qui peuvent être fixées à proximité de l'extrémité des rails 13 et 14 pour maintenir les toiles déployées. Les rails et/ou les barres de tirage (ainsi que la cassette) peuvent être équipés de moyens de blocage ou de verrouillage, permettant de les maintenir dans des emplacements prédéterminés, ou à tout emplacement le long des rails.

Quand l'utilisateur ouvre son coffre pour y prendre ou déposer un objet, il n'a souvent pas besoin d'ouvrir complètement le dispositif cache-bagages. Au contraire, il peut souhaiter qu'une partie des bagages reste dissimulée. L'utilisateur peut alors l'ouvrir partiellement comme l'illustre la figure 4.

Dans cette position, la cassette 11 se trouve sensiblement au milieu du coffre du véhicule. La toile 31, qui est destinée à couvrir la partie du coffre allant de la cassette à l'ouverture du coffre, a été repliée par l'utilisateur. Celui-ci a pour cela agi sur la barre de tirage 311 dans la direction indiquée par la flèche 42. La seconde toile d'occultation 21, qui couvre la surface allant de la cassette 11 à la banquette arrière 41 reste, elle, déployée.

L'utilisateur peut ainsi accéder facilement à environ la moitié du volume du coffre. Pour remettre le dispositif du cache-bagages en position d'occultation complète, il n'aura cependant pas à aller rechercher la barre de tirage 311 jusqu'au niveau de la banquette arrière 41. En effet, cette barre de tirage 311 est disponible au niveau de la cassette 11. L'utilisation de ce dispositif d'occultation est donc simplifiée.

Si l'utilisateur a besoin d'accéder à la totalité du volume du coffre, il peut ouvrir complètement le dispositif d'occultation en le mettant dans la position représentée par la figure 5. Dans cette position, la cassette 11 a été déplacée le long des rails de façon être rapprochée de la banquette arrière 41. La toile 21 est donc enroulée sur son tube enrouleur. Dans cette position, le dispositif d'occultation ne couvre plus qu'une très faible surface du coffre, correspondant essentiellement aux surfaces des barres de tirage 211 et 311.

En cas de besoin, l'utilisateur peut également retirer de son coffre le dispositif d'occultation, qui, dans un mode de réalisation préférentiel, est amovible.

Quand le dispositif d'occultation recouvre la totalité du volume du coffre, l'utilisateur peut facilement accéder au coffre depuis l'habitacle du véhicule. Pour cela, il lui suffit d'actionner la barre de tirage 211, située proche de la banquette arrière, afin de replier la toile 21, comme l'illustre la figure 6. Il aura ainsi accès à la partie du coffre située proche de la banquette arrière 41, sans avoir à sortir du véhicule.

### 6.4 Coulissement dans les rails

Comme le présentent les figures 4 et 5, la cassette 11 est équipée de coulisseaux 111 et 112 lui permettant de coulisser dans les rails 12 et 13. Selon un mode de réalisation avantageux de l'invention, les barres de tirage 211 et 311 sont également équipées de coulisseaux, respectivement 212 et 312, leur permettant également de coulisser dans les mêmes rails 12 et 13.

Ces barres de tirages sont également munies de systèmes d'attache, connues en eux-mêmes de l'homme du métier, permettant de les accrocher, quand les toiles d'occultation sont déployées. La barre de tirage 211 peut ainsi être accrochée à proximité de la banquette arrière 41 et la barre de tirage 311 peut ainsi s'accrocher à proximité de l'ouverture du coffre. Quand l'utilisateur agit sur ces barres de tirage pour les décrocher, des moyens de rappel liés au tube enrouleur peuvent avantageusement agir sur les toiles d'occultation pour les replier automatiquement, comme l'indique la flèche 42.

Le coulissement de la cassette 11 le long des rails 12 et 13 peut avantageusement être verrouillable par l'utilisateur. Selon un autre mode de réalisation, le coulissement de la cassette 11, de la barre de tirage 211 et de la barre de tirage 311 peuvent être verrouillés par l'utilisateur indépendamment les uns des autres, en toute position des rails.

On peut prévoir dans les rails des éléments (par exemple des gâches) définissant différents emplacements de maintien pour la cassette et pour les barres de tirage. On peut également prévoir des moyens de verrouillage agissant en tous emplacements, pour offrir une modularité optimisée.

### 6.5 Utilisation avec plusieurs jeux de rails

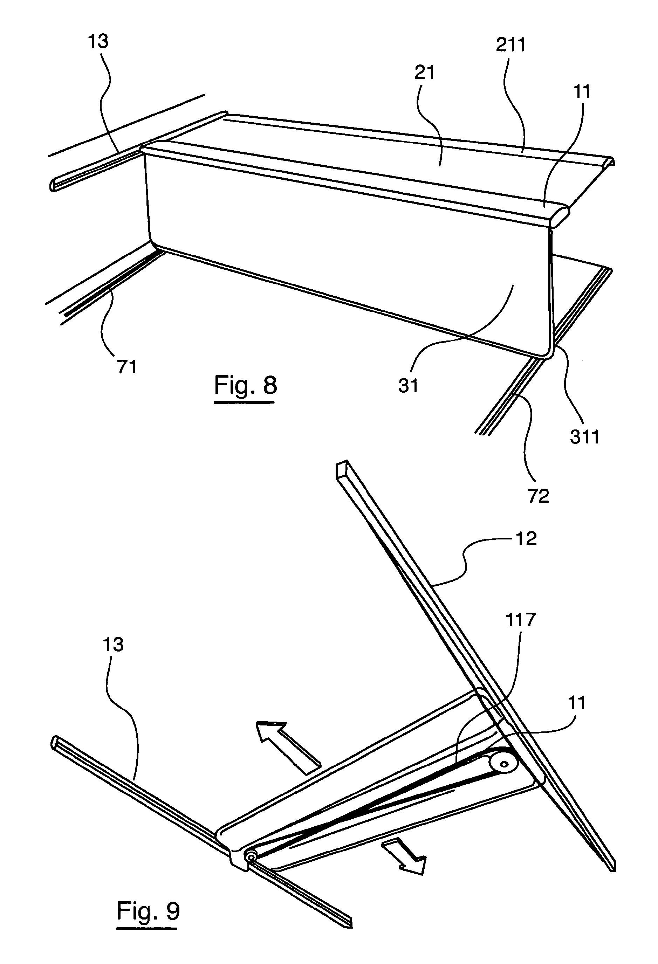

Les figures 7 et 8 présentent un autre mode de réalisation de l'invention, mettant en oeuvre plusieurs jeux de rails. Dans ce mode de réalisation, la cassette 11 et les barres de tirage 211 et 311 peuvent coulisser le long des rails 13 et 12, mais elles peuvent être également être retirées de ces rails 12 et 13 et être engagées dans un second jeu de rails 71 et 72.

Dans le mode de réalisation représenté, le second jeu de rails 71 et 72 est situé sur le plancher du coffre. On peut cependant imaginer que ces rails soient situés à un autre endroit, par exemple au niveau du pavillon du véhicule. On peut également imaginer qu'il y ait plusieurs jeux de rails, par exemple un jeu au niveau du plancher et un jeu au niveau du pavillon du véhicule.

En outre, on peut prévoir, en complément ou en remplacement d'un second jeu de rails, un ou plusieurs emplacements fixes d'accrochage de la cassette et/ou des barres de tirage.

Selon le mode de réalisation représenté par les figures 7 et 8, les rails 71 et 72 et les rails 12 et 13 ne sont pas orientés dans le même sens. Les mêmes coulisseaux ne peuvent donc pas être utilisés pour faire coulisser la cassette 11 dans ces différents jeux de rails. La cassette 11 et les barres de tirage 211 et 311 sont donc munis de plusieurs jeux de coulisseaux pour coulisser dans ces différents rails.

Ces différents jeux de rails permettent de compartimenter le volume du coffre de façon à l'adapter aux besoins de l'utilisateur. Ainsi, dans la position « panier » représentée sur la figure 7, la cassette 11 est montée sur les rails 71 et 72, au niveau du plancher, alors que les barres de tirage 211 et 311 sont montées sur les rails 12 et 13, au niveau du haut du coffre. Les toiles d'occultation 21 et 31 forment alors un « panier » dans le coffre, ce qui offre de nouvelles possibilités de rangement à l'utilisateur. Bien évidemment, la cassette 11 et les barres de tirage 211 et 311 peuvent coulisser comme l'indiquent les flèches 73, 74 et 75 de façon à faire varier les dimensions et/ou la position de ce panier.

Le cas échéant, on peut prévoir une ou plusieurs tiges amovibles venant se placer dans les rails, et permettant de guider la toile, par exemple pour élargir le fond de ce panier.

La figure 8 présente une autre possibilité selon laquelle la cassette 11 et la barre de tirage 211 sont montées dans les rails 12 et 13, et la barre de tirage 311 est montée sur les rails 71 et 72 au niveau du plancher du coffre. Cette configuration peut permettre de délimiter un compartiment « secret » dans le coffre. Elle peut ainsi permettre, par exemple, de transporter dans son coffre des bagages et un animal, sans que les bagages soient au contact de l'animal.

### 6.6 Système d'équilibrage

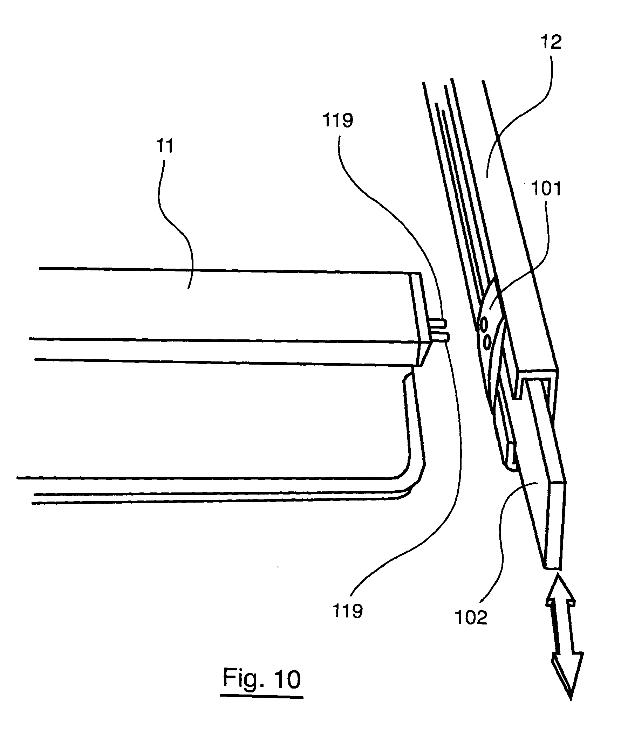

Les figures 9 et 10 représentent des détails d'un exemple de système de coulissement de la cassette 11 dans les rails 12 et 13 selon des modes de réalisation particuliers de l'invention.

La figure 9, qui montre la cassette 11 vue de dessous, permet de voir un mécanisme d'équilibrage (généralement dissimulé à l'intérieur de la cassette) permettant que la cassette 11 reste en permanence, pendant son coulissement, sensiblement perpendiculaire aux rails de guidage 12 et 13. Ce mécanisme est constitué de deux poulies reliées par un câble 117 définissant une boucle croisée en forme de 8. Quand l'un des cotés de la cassette 11 avance le long d'un rail, ce mouvement fait tourner la poulie située proche de ce rail. Le mouvement est transmis par le câble 117 à la seconde poulie, qui entraîne un mouvement de coulissement le long du deuxième rail.

La figure 10 présente un mode de réalisation de l'invention selon laquelle la cassette 11 ne coulisse pas directement dans les rails 12 et 13. En effet, la cassette est reliée par des ergots 119 à un palier coulissant 101, qui coulisse lui même par rapport au rail grâce à un coulisseau 102.

Cette solution permet que le dispositif cache-bagages soit amovible de façon très simple. Ces coulisseaux peuvent en outre être utilisés pour la solidarisation d'autres éléments amovibles. Le cas échéant, une solution technique semblable peut bien entendu être mise en oeuvre pour le coulissement des barres de tirage.

## Revendications

1. Dispositif cache-bagages destiné à occulter au moins une partie d'un coffre d'un véhicule automobile, **caractérisé en ce qu'**il comprend une cassette (11) mobile portant au moins deux tubes enrouleurs, portant chacun au moins un écran d'occultation, dont au moins deux écrans d'occultation (21, 31) susceptibles d'être déployés dans des directions différentes,
et **en ce que** ladite cassette mobile peut prendre au moins deux positions distinctes :
- une position cache-bagages, ladite cassette étant disposée dans une partie supérieure dudit coffre et lesdits écrans étant déployés dans un plan sensiblement horizontal ;
- une position panier, ladite cassette étant disposée dans une partie inférieure dudit coffre et lesdits écrans étant déployés vers ladite partie supérieure.

2. Dispositif cache-bagages selon la revendication 1 **caractérisé en ce que** ladite cassette (11) comprend et/ou coopère avec des moyens de coulissement le long de deux premiers rails de guidage (12, 13) montés dans des parois latérales dudit coffre.

3. Dispositif cache-bagages selon la revendication 2, **caractérisé en ce que** ladite cassette (11) et/ou au moins un desdits premiers rails (12, 13) comprend des moyens de blocage du coulissement de ladite cassette (11) dans lesdits rails (12, 13).

4. Dispositif cache-bagages selon l'une quelconque des revendications 2 et 3, **caractérisé en ce qu'**au moins un desdits écrans d'occultation (21, 31) porte une barre de tirage (211, 311) coulissant le long desdits premiers rails de guidage (12, 13).

5. Dispositif cache-bagages selon la revendication 4, **caractérisé en ce que** ladite cassette (11) et/ou la ou lesdites barres de tirage (211, 311) peuvent coulisser dans au moins un second jeu de rails de guidage (71, 72) monté dans ledit véhicule et/ou être solidarisées à au moins un point de fixation éloigné du plan défini par lesdits premiers rails (12, 13).

6. Dispositif cache-bagages selon la revendication 5, **caractérisé en ce qu'**au moins un desdits seconds jeux de rails (71, 72) est situé sensiblement au niveau du plancher dudit coffre.

7. Dispositif cache-bagages selon l'une quelconque des revendications 5 et 6, **caractérisé en ce que** ladite cassette (11) comporte des premiers moyens de coulissement destinés à coulisser au moins dans lesdits premiers rails (12, 13) et des seconds moyens de coulissement destinés à coulisser au moins dans un desdits seconds jeux de rails (71, 72).

8. Dispositif cache-bagages selon l'une quelconque des revendications 1 à 7, **caractérisé en ce qu'**il est amovible dudit véhicule.

9. Dispositif cache-bagages selon l'une quelconque des revendications 1 à 8, **caractérisé en ce que** ladite cassette (11) est équipée de moyens d'équilibrage pour la maintenir perpendiculaire auxdits rails.

10. Véhicule automobile **caractérisé en ce qu'**il comprend un dispositif cache-bagages selon l'une quelconque des revendications 1 à 9, comprenant une cassette (11) mobile portant au moins deux tubes enrouleurs, portant chacun au moins un écran d'occultation, dont au moins deux écrans d'occultation (21, 31) susceptibles d'être déployés dans des directions différentes, ladite cassette mobile pouvant prendre au moins deux positions distinctes :
- une position cache-bagages, ladite cassette étant disposée dans une partie supérieure dudit coffre et lesdits écrans étant déployés dans un plan sensiblement horizontal ;
- une position panier, ladite cassette étant disposée dans une partie inférieure dudit coffre et lesdits écrans étant déployés vers ladite partie supérieure.

## Claims

1. Luggage-concealing device intended to conceal at least part of the boot of a motor vehicle, **characterised in that** it comprises a movable box (11) carrying at least two winding tubes each carrying at least one concealing curtain, including at least two concealing curtains (21, 31) which may be deployed in different directions,
and **in that** said movable box is designed to take at least two distinct positions:
- a luggage-concealing position, wherein said box is positioned in an upper part of said boot and said curtains are deployed in a substantially horizontal plane;
- a basket position, wherein said box is positioned in a lower part of said boot and said curtains are deployed towards said upper part.

2. Luggage-concealing device according to claim 1, **characterised in that** said box (1) comprises, and/or cooperates with, means for sliding along two first guide rails (12, 13) which are mounted in side walls of said boot.

3. Luggage-concealing device according to claim 2, **characterised in that** said box (11) and/or at least one of said first rails (12, 13) comprises means for blocking the sliding of said box (11) within the said rails (12, 13).

4. Luggage-concealing device according to either of claims 2 or 3, **characterised in that** at least one of said concealing curtains (21, 31) carries a draw-bar (211, 311) which slides along said first guide rails (12, 13).

5. Luggage-concealing device according to claim 4, **characterised in that** said box (11) and/or said draw-bar or draw-bars (211, 311) are suitable to slide within at least one second set of guide rails (71, 72) mounted in said vehicle, and/or firmly attached to at least one fastening point which is remote from the plane defined by said first rails (12, 13).

6. Luggage-concealing device according to claim 5, **characterised in that** at least one of said second sets of rails (71, 72) is located substantially at the level of the floor of said boot.

7. Luggage-concealing device according to either of claims 5 or 6, **characterised in that** said box (11) comprises first means of sliding which are intended to slide at least within said first rails (12, 13) and second means of sliding which are intended to slide at least within one of said second sets of rails (71, 72).

8. Luggage-concealing device according to any of claims 1 to 7, **characterised in that** it can be removed from said vehicle.

9. Luggage-hiding device according to any of claims 1 to 8, **characterised in that** said box (11) is fitted with balancing means for keeping it perpendicular to said rails.

10. Motor vehicle, **characterised in that** it comprises a luggage-concealing device according to any of claims 1 to 9, comprising a movable box (11) carrying at least two winding tubes each carrying at least one concealing curtain, including at least two concealing curtains (21, 31) which may be deployed in different directions, said movable box being designed to take at least two distinct positions:
- a luggage-concealing position, wherein said box is positioned in an upper part of said boot and said curtains are deployed in a substantially horizontal plane;
- a basket position, wherein said box is positioned in a lower part of said boot and said curtains are deployed towards said upper part.

## Patentansprüche

1. Gepäckabdeckvorrichtung, die dazu bestimmt ist, mindestens einen Teil eines Kofferraums eines Kraftfahrzeugs zu verdecken, **dadurch gekennzeichnet, dass** sie eine bewegliche Kassette (11) aufweist, die mindestens zwei Aufrollröhren trägt, die jeweils mindestens einen Abdeckschirm tragen, darunter mindestens zwei Abdeckschirme (21, 31), die in unterschiedliche Richtungen aufgebreitet werden können,
und dass die bewegliche Kassette mindestens zwei getrennte Positionen einnehmen kann:
- eine Gepäckabdeckungsposition, wobei die Kassette in einem oberen Teil des Kofferraums positioniert ist und die Schirme in einer im Wesentlichen horizontalen Ebene ausgebreitet sind;
- eine Korbposition, wobei die Kassette in einem unteren Teil des Kofferraums angeordnet ist und die Schirme zu dem oberen Teil aufgebreitet sind.

2. Gepäckabdeckvorrichtung nach Anspruch 1, **dadurch gekennzeichnet, dass** die Kassette (11) Mittel zum Gleiten entlang von zwei ersten Führungsschienen (12, 13), die in den Seitenwänden des Kofferraums montiert sind, aufweist und/oder mit ihnen zusammenarbeitet.

3. Gepäckabdeckvorrichtung nach Anspruch 2, **dadurch gekennzeichnet, dass** die Kassette (11) und/oder mindestens eine der ersten Schienen (12, 13) Mittel zum Blockieren des Gleitens der Kassette (11) in den Schienen (12, 13) aufweist.

4. Gepäckabdeckvorrichtung nach einem der Ansprüche 2 und 3, **dadurch gekennzeichnet, dass** mindestens einer der Abdeckschirme (21, 31) eine Zugstange (211, 311) trägt, die entlang der ersten Führungsschienen (12, 13) gleitet.

5. Gepäckabdeckvorrichtung nach Anspruch 4, **dadurch gekennzeichnet, dass** die Kassette (11) und/oder die Zugstangen (211, 311) in mindestens einem zweiten Führungsschienensatz (71, 72) gleiten können, der in dem Fahrzeug montiert ist und/oder die mit mindestens einem Befestigungspunkt verbunden werden kann, der von der Ebene entfernt ist, die von den ersten Schienen (12, 13) definiert ist.

6. Gepäckabdeckvorrichtung nach Anspruch 5, **dadurch gekennzeichnet, dass** sich mindestens einer der zweiten Schienensätze (71, 72) im Wesentlichen in Kofferraumbodenhöhe befindet.

7. Gepäckabdeckvorrichtung nach einem der Ansprüche 5 und 6, **dadurch gekennzeichnet, dass** die Kassette (11) erste Mittel zum Gleiten, die dazu bestimmt sind, mindestens in den ersten Schienen (12, 13) zu gleiten, und zweite Mittel zum Gleiten aufweist, die dazu bestimmt sind, in mindestens einem der zweiten Schienensätze (71, 72) zu gleiten.

8. Gepäckabdeckvorrichtung nach einem der Ansprüche 1 bis 7, **dadurch gekennzeichnet, dass** sie von dem Fahrzeug abnehmbar ist.

9. Gepäckabdeckvorrichtung nach einem der Ansprüche 1 bis 8, **dadurch gekennzeichnet, dass** die Kassette (11) mit Ausgleichmitteln ausgestattet ist, um sie senkrecht zu den Schienen zu halten.

10. Kraftfahrzeug, **dadurch gekennzeichnet, dass** es eine Gepäckabdeckvorrichtung nach einem der Ansprüche 1 bis 9 aufweist, die eine bewegliche Kassette (11) aufweist, die mindestens zwei Aufrollröhren trägt, die jeweils mindestens einen Abdeckschirm tragen, darunter mindestens zwei Abdeckschirme (21, 31), die in unterschiedliche Richtungen aufgebreitet werden können, wobei die bewegliche Kassette mindestens zwei getrennte Positionen einnehmen kann:
- eine Gepäckabdeckungsposition, wobei die Kassette in einem oberen Teil des Kofferraums angeordnet ist und wobei die Schirme in einer im Wesentlichen horizontalen Ebene aufgebreitet sind;
- eine Korbposition, wobei die Kassette in einem unteren Teil des Kofferraums angeordnet ist und die Schirme zu dem oberen Teil aufgebreitet sind.
